# EUROPEAN PATENT APPLICATION

(11) **EP 2 845 488 A1**
(43) Date of publication of application: **11.03.2015**
(21) Application number: 13183012.7
(22) Date of filing: 04.09.2013
(51) Int. Cl.: A22C 25/08

(54) **Method for carrying fish and fish carrier adapted to be connected to an overhead transport-conveyor system for carrying at least one fish at the tail part**

(71) Applicant: Marel Iceland EHF, 210 Gardabaer (IS)
(72) Inventor: Hallvardsson, Kristjan, IS-110 Reykjavik (IS); Van Hoof, Bartholomeus Gerardus Henricus Maria, 5761 AC Bakel (NL)
(74) Representative: Schmidt, Jens Joergen

(57) **Abstract**

This invention relates to a fish carrier adapted to be connected to an overhead transport-conveyor system for carrying at least one fish at the tail part of the fish with the head of the fish facing down. The fish carrier includes spaced apart bars, where one end of the spaced apart bars acting as a receiving end where a fish is received at the tail part and the other opposite end of the spaced apart bars acting as a holding end where the fish is hold at the tail part. The fish carrier is adapted to be used in relation with fish species having outwardly shoulder-like protruding parts extending from the spine of the fish at the caudal peduncle at the tail end of the fish, the distance between the spaced apart bars at the holding end being less than the distance between the outwardly shoulder-like protruding parts such that when a fish is received at receiving end it becomes propped between the spaced apart bars at the holding end via the outwardly shoulder-like protruding parts of the fish.

## Description

### FIELD OF THE INVENTION

The present invention relates to a fish carrier adapted to be connected to an overhead transport-conveyor system for carrying at least one fish at the tail part of the fish with the head of the fish facing down, and to a method of carrying fish using such a fish carrier.

### BACKGROUND OF THE INVENTION

RU2304394 describes a fish processing method where the fish is hanged at the tail part by providing two puncture holes in fish tail-stem, above and below spine, on line perpendicular to the latter and introducing double metal spit into puncture holes, thereafter fixing fish tail-stem at both sides.

This method is however both time demanding and also damages the fish and reduces the quality of the fish.

### SUMMARY OF THE INVENTION

On the above background it is an object of embodiments of the present invention to provide an improved fish carrier that facilitates putting the fish onto the fish carrier and facilitates removing the fish from the fish carrier without damaging the fish, and where it is ensured that the fish is securely fixed to the fish carrier.

Embodiments of the invention preferably seeks to mitigate, alleviate or eliminate one or more of the above mentioned disadvantages singly or in any combination. In particular, it may be seen as an object of embodiments of the present invention to provide a fish carrier that solves the above mentioned problems, or other problems, of the prior art.

To address one or more of these concerns, in a first aspect of the invention a fish carrier is provided adapted to be connected to an overhead transport conveyor system for carrying at least one fish at the tail part of the fish with the head of the fish facing down, comprising:
spaced apart bars, one end of the spaced apart bars acting as a receiving end where a fish is received at the tail part and the other opposite end of the spaced apart bars acting as a holding end where the fish is hold at the tail part,
wherein the fish carrier is adapted to be used in relation with fish species having outwardly protruding parts extending from the spine of the fish at the tail end of the fish, the distance between the spaced apart bars at the holding end being less than the distance between the outwardly protruding parts such that when a fish is received at the receiving end it becomes propped between the spaced apart bars at the holding end via the outwardly protruding parts of the fish.

Accordingly, a simple fish carrier is provide that is capable of holding at least one fish at the tail end such that it may be freely hanging while being conveyed by the overhead transport conveyor system. Also, the fact that the distance between the outwardly protruding parts is larger than the distance between the spaced apart bars at the proximal end of the spaced apart bars it is ensured that the fish will not slide there through. Moreover, the fish carrier ensures an optimal handling of the fish and prevents damaging the fish when placing and removing the fish onto/from the fish carrier.

An example of fish species having such outwardly protruding parts is, but is not limited to, the Atlantic salmon.

The geometrical shape of the outwardly protruding parts may also be considered as being shoulder-like, i.e. that the outwardly protruding parts may be considered as being outwardly shoulder-like protruding parts. Moreover, the shoulder-like protruding parts may according to the present invention be the "hypural" or "hypural" plate. Accordingly, the term "distance between the outwardly protruding parts" may according to the present invention mean the distance between the opposite ends or the height of the hypural or hypural plate. It is well known that this distance is somewhat longer for e.g. the Atlantic salmon compared to other fish species of similar size and thus the Atlantic salmon is a good example of a fish species suitable to be used in relation to the above mentioned fish carrier.

By the term spaced apart bars is according to the present invention meant any types of material that have any type of cross sectional shape, e.g. a circular cross sectional shape (i.e. a rod), rectangular cross sectional shape, an elliptical cross sectional shape, and the like.

The overhead transport conveyor system may according to the present invention be any type of a rail system and the like adapted to convey the fish while hanging with the fish facing down between e.g. one or more processing stations, and/or one or more handling stations, etc. Accordingly, by implanting such a overhead transport conveyor system a low cost and more compact processing station is provided that among other things allows tracing and/or tracking individual fishes during the processing.

In one embodiment, the spaced apart bars extend upwardly from a first end of a base structure towards a second end of the base structure, where the distal ends of the spaced apart bars act as the receiving end and where the spaced apart bars at the proximal end act as the holding end.

In one embodiment, the distance between the spaced apart bars at the receiving end is larger than the distance between the spaced apart bars at the holding end. The distance between the pair of spaced apart bars may in one embodiment successively increase from the holding end towards the receiving end of the spaced apart bars. Thus, it is ensured that when the fish is received at the receiving end and e.g. released such that it slides towards the proximal end of the spaced apart bars that it will not fall out of the fish carrier.

In one embodiment, the distal ends of the spaced apart bars are bended away from the base structure. Thus, the step of putting the fish at the tail end onto the fish carrier may be facilitated.

In one embodiment, the pair of spaced apart bars is an integral part of the base structure. In that way, the fish carrier is a single piece item which simplifies that fish carrier and may lower the manufacturing costs of the fish carrier.

In one embodiment, the fish carrier further comprises a first distance adjustment mechanism adapted to adjust the distance at the holding end of the spaced apart bars to a tail end width of a received fish. The first distance adjustment mechanism may in one embodiment comprise an elastic system connected to the spaced apart bars adapted to maintain the holding end of the spaced apart bars in a contracted position in absence of a fish, where upon receiving a fish at the receiving end of the spaced apart bars the distance at the holding end of the spaced apart bars moves from the contracted position to an extended position where it becomes adapted to the width of the tail end of the received fish. Accordingly, the fish carrier is capable of adapting to different sizes and/or types of fish via the spring load in the elastic system, but the distance between the outwardly protruding parts may of course be different depending on the size and/or type of fish. The elastic system may be adjusted such that a contracted position, which may also be referred to as a rest position, may in an embodiment be a smallest distance estimate between the outwardly protruding parts so as to ensure that a received fish will at no time fall through the fish carrier.

In one embodiment, the distance between the base part and the spaced apart bars at the holding end matches a tail end thickness of a received fish. In that way a further support, in addition to the support at the holding end, is provided between the base part and the spaced apart bars at the holding end.

In one embodiment, the fish carrier further comprises a second distance adjustment mechanism adapted to adjust the distance between the base part and the spaced apart bars at the holding end to a tail end thickness of a received fish. In an embodiment, the second distance adjustment mechanism comprises an elastic system connected to the base part and the pair of spaced apart bars adapted to maintain the base part and the pair of spaced apart bars in a contracted position in absence of a fish, where upon receiving a fish at the holding end of the spaced apart bars the distance between the base part and the pair of spaced bars moves from the contracted position to an extended position where it becomes adapted to the thickness of the tail end of the received fish. Accordingly, the fish carrier is capable of adapting to different thicknesses of fishes at the tail end, while simultaneously via the spring load in the elastic system to provide a support to the tail end of the fish. A contracted position may in an embodiment be a smallest thickness estimate so as to ensure that a received fish will at no time fall through the fish carrier.

In one embodiment, the fish carrier may have two or more of such spaced apart bars, e.g. two or more pairs of such space apart bars may be provided on one and the same fish carrier, where e.g. one pair of such spaced apart bars protrude from a base structure at one side of the base structure, and another pair of such pair of spaced apart bars may protrude at the opposite side of the base structure (180° rotation) such that the fish carrier is capable of carrying two fishes at the same time. In the same way, three or four pairs of spaced apart bars may be distributed along a central base structure, where in the former case the spaced apart bars are arranged at 120° angle and the fish carrier is thus capable of carrying three fishes at the tail end at the same time, and in the latter case arranged at 90° angle where the fish carrier is able of carrying four fishes at the tail end at the same time.

According to a second aspect the present invention relates to a method of carrying a fish using a fish carrier adapted to be connected to an overhead transport-conveyor system for carrying at least one fish at the tail part of the fish with the head of the fish facing down, where the fish carrier comprises:
spaced apart bars, one end of the spaced apart bars acting as a receiving end where a fish is received at the tail part and the other opposite end of the spaced apart bars acting as a holding end where the fish is hold at the tail part,
wherein the fish carrier is adapted to be used in relation with fish species having outwardly protruding parts extending from the spine of the fish at the tail end of the fish, the distance between the spaced apart bars at the holding end being less than the distance between the outwardly protruding parts such that when a fish is received at receiving end it becomes propped between the spaced apart bars at the holding end via the outwardly protruding parts of the fish.

According to another aspect, a fish carrier is provided adapted to be connected to an overhead transport conveyor system for carrying at least one fish at the tail part of the fish with the head of the fish facing down, comprising:
spaced apart bars, one end of the spaced apart bars acting as a receiving end where a fish is received at the tail part and the other opposite end of the spaced apart bars acting as a holding end where the fish is hold at the tail part,
wherein distance between the spaced apart bars of the fish carrier at the holding end being less than the distance between the width and/or the thickness at the tail end, e.g. at the "hypural" or "hypural" plate end, of the fish such that when a fish is received at receiving end it becomes propped between the spaced apart bars at the holding.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1a,b depicts graphically a perspective view and a side view of one embodiment of a fish carrier according to the present invention,
figure 2 depicts graphically an example of a fish species discussed in relation to figure 1,
figure 3a,b depicts a perspective view and a side view of another embodiment of a fish carrier according to the present invention,
figure 4a,b depicts a side view of yet another embodiment of a fish carrier according to the present invention,
figure 5 depicts graphically the embodiment shown in figure 4, where in this embodiment the fish carrier additionally comprise a first distance adjustment mechanism adapted to adjust the distance at a holding end of the spaced apart bars to a tail end width of a received fish,
figure 6 shows another embodiment of a first distance adjustment mechanism in figure 5,
figure 7 shows an embodiment where the fish carrier shown in figure 4 is connected to an overhead transport-conveyor system,
figure 8 shows an example where the fish carrier shown in figure 1 is connected to an overhead transport-conveyor system discussed in relation to figure 6,
figures 9-27 show different embodiments of fish carriers according to the present invention,
figures 28 and 29 show examples of another types of fish carriers,
figures 30 and 31 depicts graphically a side view of the fish carrier shown in figure 28,
figures 32 shows another example of a fish carrier,
figure 33 shows the fish carrier from figure 32 connected to an overhead transport-conveyor system, and
figure 34 and 35 show a perspective view and a side view of yet another example of fish carrier adapted to be connected to an overhead transport-conveyor system.

### DESCRIPTION OF EMBODIMENTS

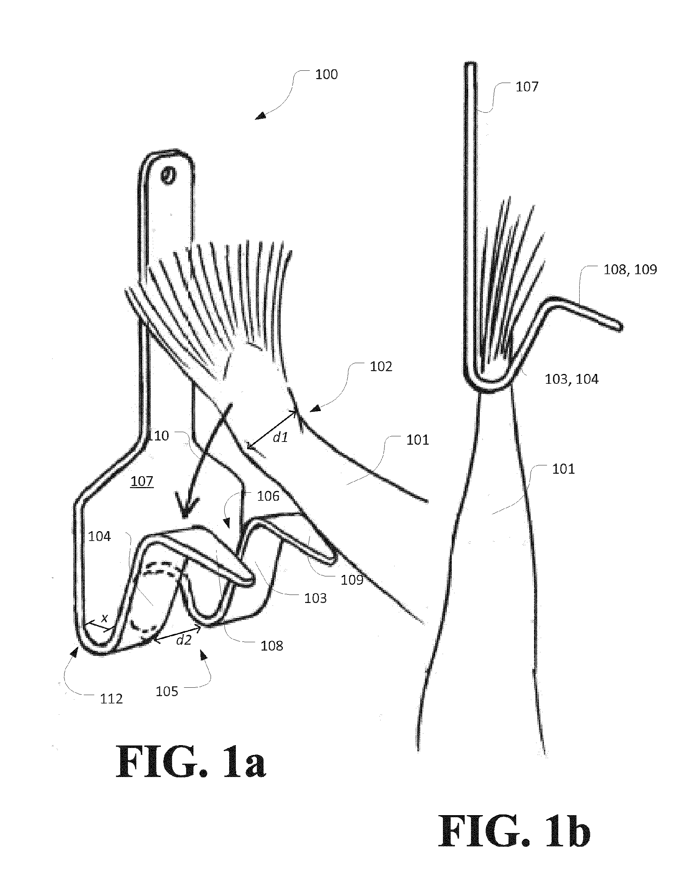

Figures 1a,b depicts graphically a perspective view and a side view of one embodiment of a fish carrier 100 according to the present invention, were the fish carrier is adapted to be connected to an overhead transport-conveyor system (not shown) for carrying at least one fish 101 at the tail part of the fish with the head of the fish facing down (see figure 1b).

The fish carrier 100 comprises spaced apart bars 103, 104, where one end of the spaced apart bars acts as a receiving end 106 where a fish 101 is received at the tail part and the other opposite end of the spaced apart bars acting as a holding end 105 where the fish is hold at the tail part.

The fish carrier 100 is preferably adapted to be used in relation with fish species having outwardly protruding parts 102, or outwardly shoulder-like protruding parts, extending from the tail end of the fish, or at the "hypural" of the fish. This will be discussed in more details later.

In the following, the phrase "outwardly shoulder-like protruding parts" will be used.

The distance *d2* between the spaced apart bars 103, 104 at the holding end 105 is less than the distance *d1* between the outwardly shoulder-like protruding parts 102. In this embodiment, the spaced apart bars 103, 104 extend upwardly from a first end of a flat base structure 107 towards a second end of the base structure. A fish 101 is received at the tail end as indicated by arrow 110 at the distal ends of the spaced apart bars which act as the receiving end 106, and where the spaced apart bars at the proximal end act as the holding end 105. Moreover, the distal ends 108, 109 of the spaced apart bars 103,104 may be bended away from the base structure 107.

In one embodiment, the distance *x* between the base part 107 and the spaced apart bars 103, 104 at the holding end substantially matches a tail end thickness of a received fish (see figure 1b), e.g. it may be somewhat less that the thickness at the tail end of the received fish. In that way a further support, in addition to the support at the holding end, is provided between the base part and the spaced apart bars at the holding end.

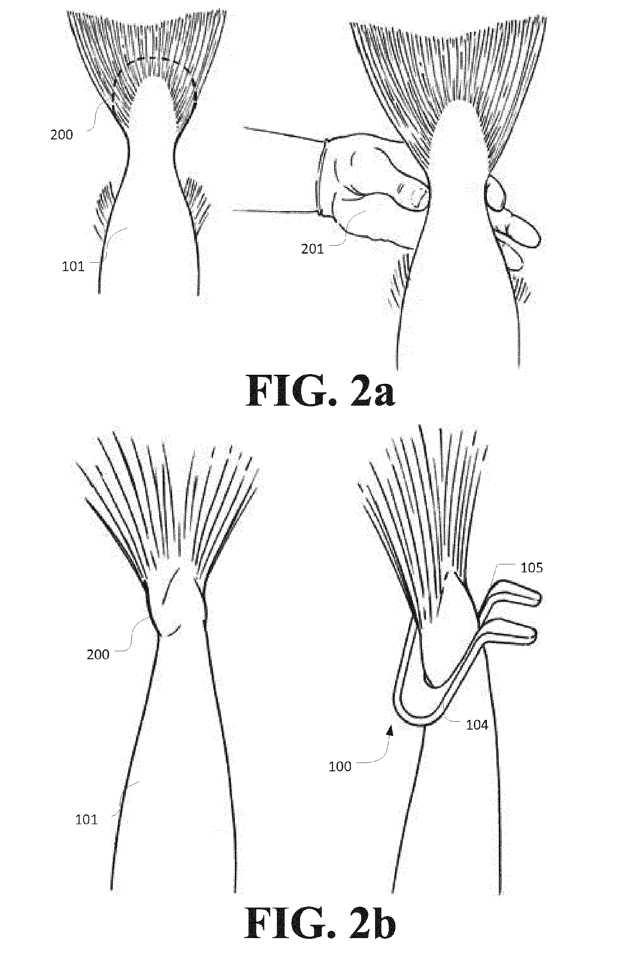

Figure 2 depicts graphically an example of a fish species 101 discussed in relation to figure 1, which in this example is an Atlantic salmon. The width/height of the hypural or hypural plate which may be considered as the bone to which are attached the spiny rays of the caudal fin of a fish, of e.g. the Atlantic salmon is long compared to many other fish species of similar size. These morphological characteristics allow it to be picked up by hand 201 at the tail as depicted in figure 2a and thus makes e.g. the Atlantic salmon suitable to be hanged at the tail part in the fish carrier according to the present invention. It is because of this property that the fish will be propped between the spaced apart bars at the holding end of the fish carrier (see figure 2b) when, as discussed in relation to figure 1, the distance between the spaced apart bars 103, 104 at the holding end 105 is less than the distance between these outwardly shoulder-like protruding parts comprised within the area 200 shown here.

It should be noted that the present invention is not limited to this particular type of fish species, i.e. to the Atlantic salmon, but may just as well be implemented for fish species having similar characteristics.

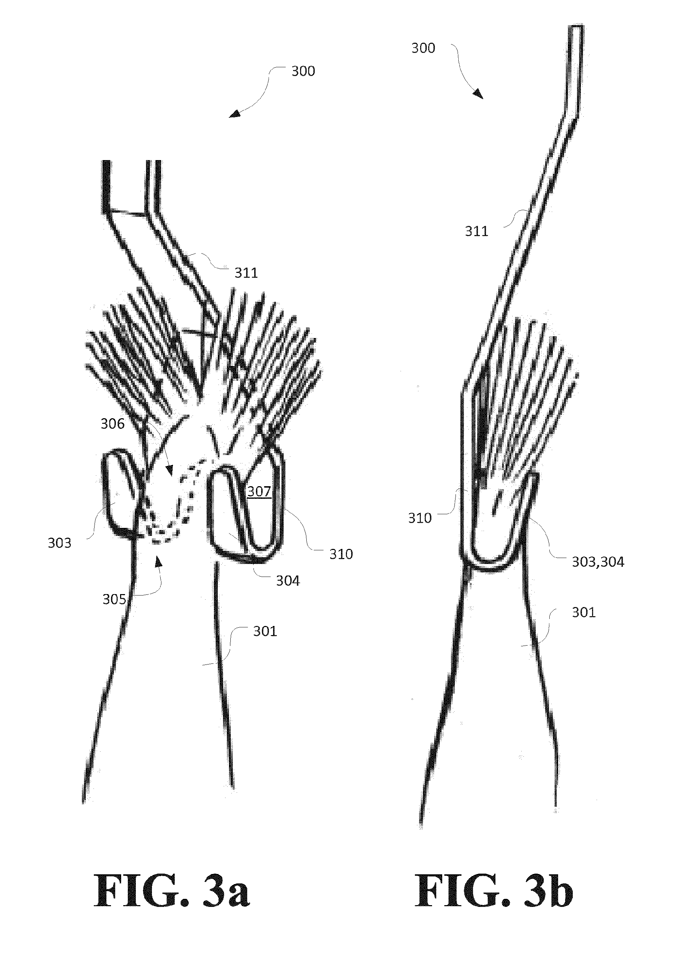

Figure 3a,b depicts a perspective view and a side view of another embodiment of a fish carrier 300 according to the present invention comprising spaced apart bars 303, 304, where one end of the spaced apart bars acts as a receiving end 306 where a fish 301 is received at the tail part and the other opposite end of the spaced apart bars act as a holding end 305 for holding the fish at the tail part.

The spaced apart bars 303, 304 extend upwardly from a first end of a base structure 307 towards a second end of the base structure. The base structure in this embodiment comprises a first plate portion 310 and a second plate portion 311, where the second flat portion 311 forms an angle in relation to the first plate portion 310 (an obtuse angle).

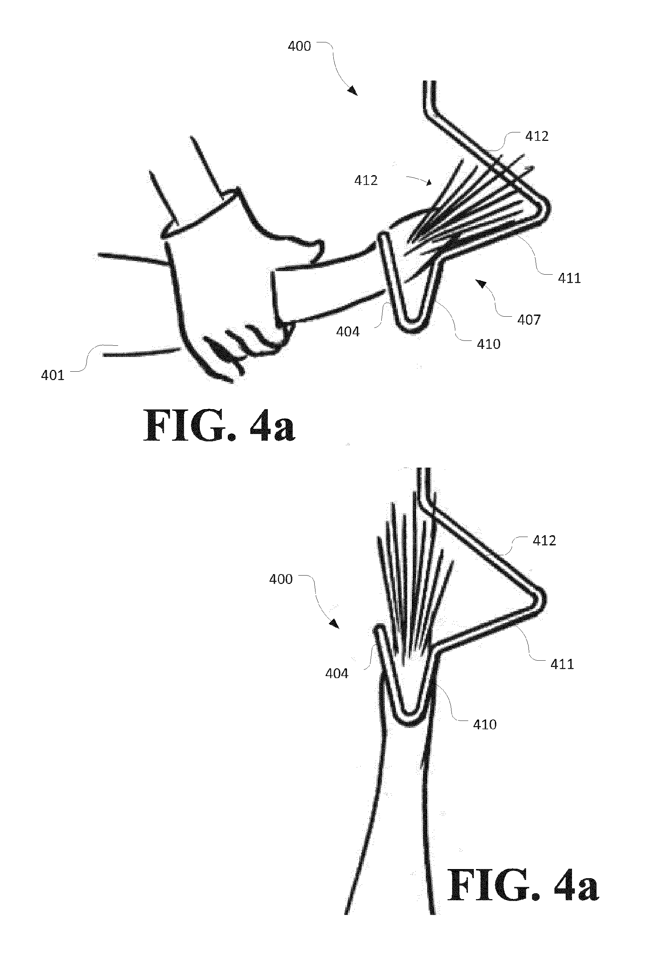

Figure 4a,b depicts a side view of yet another embodiment of a fish carrier 400 according to the present invention comprising spaced apart bars 404, similar as shown in figure 3a,b, but with a different shaped base structure 407. As depicted here, the base structure may be considered as being divided into three plate portions 410-413, where the first plate portion 410 forms an acute angle in relation to the spaced apart bars 404, or as shown here and in figure 2 have a V or U-shaped side view similar as shown in figure 3. The second and third plate portions 411, 412 define a kind of a V or U-shaped outwardly protruding receiving cavity for receiving a tail 412 of a received fish 401 so as to facilitate the process of placing the fish 401 onto the fish carrier 400.

The step of putting the fish onto the fish carrier should not be construed as being limited to a manually process, but this may just as well be a semi-or fully automatic process where e.g. robotic arms pick fish up and place them automatically onto the fish carrier.

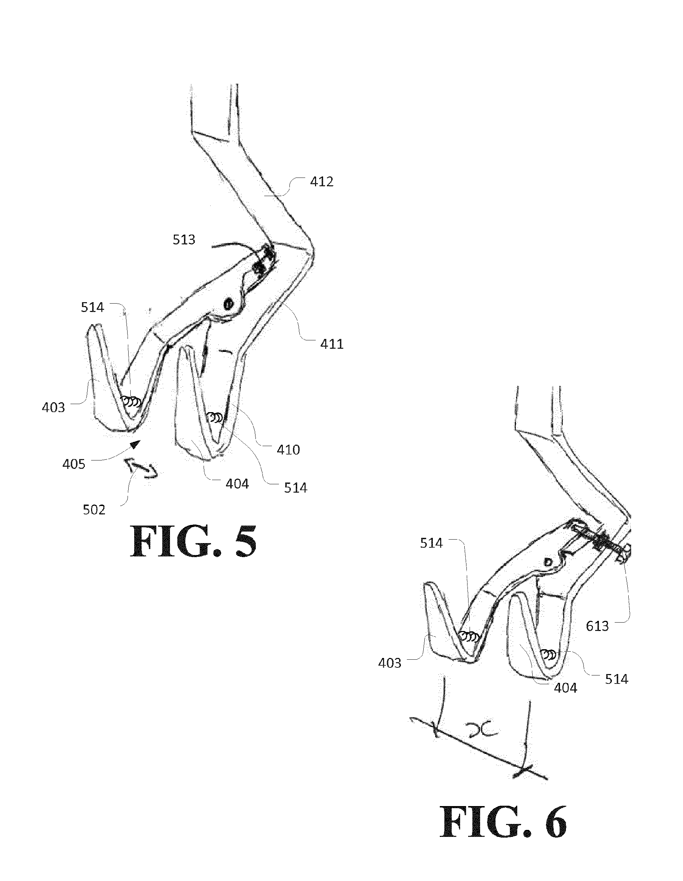

Figure 5 depicts graphically the embodiment shown in figure 4, where in this embodiment the fish carrier additionally comprise a first distance adjustment mechanism 513 adapted to adjust the distance at the holding end 405 of the spaced apart bars 403, 404 to a tail end width of a received fish. The first distance adjustment mechanism comprises an elastic system 513 such as springs so to maintain the holding end 405 of the spaced apart bars 403, 404 in a contracted position in absence of a fish. Upon receiving a fish at the receiving end 405 of the spaced apart bars 403, 404 the distance at the holding end of the spaced apart bars moves from the contracted position to an extended position as indicated by the arrow 502 where it becomes adapted to the width of the tail end of the received fish, and vice verse when removing the fish the spaced apart bars 403, 404 move back to the contracted position via e.g. the spring load. In that way the fish carrier can be implemented for different sizes and/or types of fish.

The fish carrier shown here may also in one embodiment further comprise a second distance adjustment mechanism adapted to adjust the distance between the base part 410 and the spaced apart bars 403, 404 at the holding end 405 to a tail end thickness of a received fish. In this embodiment, the second distance adjustment mechanism comprises an elastic system 514 connected to the base part 410 and the pair of spaced apart bars 403, 404 so as to maintain the base part and the pair of spaced apart bars in a contracted position in absence of a fish, where upon receiving a fish at the holding end of the spaced apart bars 403, 404 the base part 410 and the pair of spaced bars 403, 404 are pushed away from each other, i.e. move from the contracted position to an extended position where it becomes adapted to the thickness of the tail end of the received fish. Accordingly, the fish carrier is capable of adapting to different thicknesses of fishes at the tail end, while simultaneously via the spring load in the elastic system to provide a support to the tail end of the fish. A contracted position may in an embodiment be a smallest thickness estimate so as to ensure that a received fish will at no time fall through the fish carrier

Figure 6 shows another embodiment of a first distance adjustment mechanism in figure 5, where instead of using an elastic system as a first distance adjustment mechanism, a screw 613 is used that allows manual adjustment of the distance between the spaced apart bars 403, 404.

Such a first adjustment mechanism may of course also be implanted on other embodiments of fish carriers such as the one shown in figure 1.

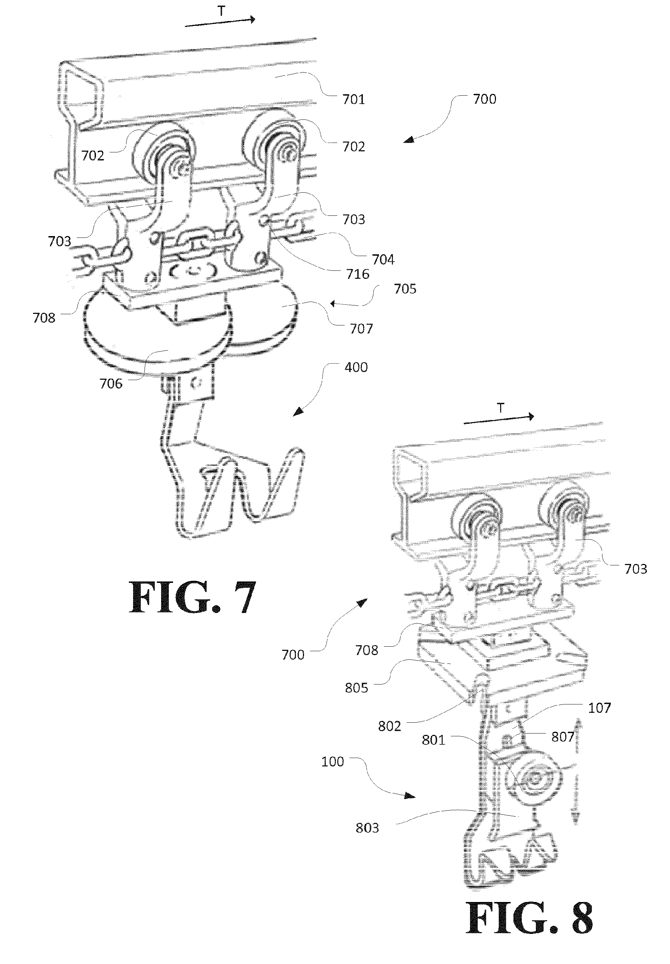

Figure 7 shows an embodiment where the fish carrier 400 shown in figure 4 is connected to an overhead transport-conveyor system 700. The embodiment shown here should of course not be limited to the fish carrier shown in figure 4, but any type of a fish carrier may be attached to the overhead transport-conveyor system 700.

The overhead transport-conveyor system 700 comprises a track 701, two trolleys 703 and a drive chain 704. The trolleys 703 further comprise guide wheels 702 that run along the track 701 and chain clamps 716 that clamp the trolleys 703 onto the drive chain 704 of the overhead transport-conveyor system 700. The number of trolleys should not be construed as being limited to two, but a single trolley or three or more trolleys may just as well be used.

In one embodiment, the fish carrier may be connected to the two trolleys 702 via a guide block 708.

In the embodiment shown here, the fish carrier 400 may be connected to the two trolleys 702 via a guide block 708, to which the two trolleys 702 are mounted, and a rotation element 705. The rotation element 705 comprises two eccentric disks 706, 707 stacked onto each other, where the fish carrier 400 is attached to the lower eccentric disks 707. Together, the eccentric disks 706, 707, and thus the fish carrier 400, are rotatable relative to the guide block 708 about an axis that is perpendicular to the transport direction T as indicated by the arrow.

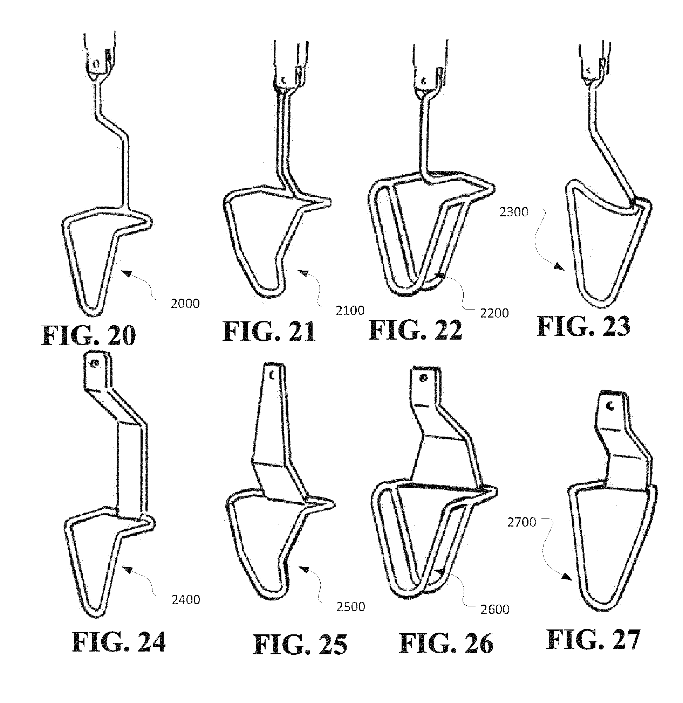

The rotation element 705 may further comprise a locking element (not shown) that may be actuated by guides or other elements arranged alongside the path that e.g. via physical interaction between the guides or other elements with the fish carrier 400 or the eccentric disks 706, 707 may lock or unlock the position of the eccentric disks 706, 707 relative to the guide block 708. The unlocking may thus trigger a rotational movement about any angle, e.g. 90° angle, relative to the conveying direction T of the trolleys 703. More details for such overhead transport-conveyor system 700 and rotation element 705 may be found in WO2011/074969, figures 21-22 and on p.59 1. 26-p.62 1. 14, hereby incorporated by reference.

Figure 8 shows an example where the fish carrier 100 shown in figure 1 is connected to an overhead transport-conveyor system 700 discussed in relation to figure 6. In this embodiment, the fish carrier 100 further comprises a support structure 803 having a distal end facing the spaced apart bars of the fish carrier partly bended towards the base plate 107 of the fish carrier 100. The support structure 803 is slideable mounted to a vertical track 807 comprised in the base plate 107 of the fish carrier, where the height of the support structure 803 may be adjusted by sliding it up and down, as indicated by the arrow, along the sliding track 807.

This support structure 803 is adapted to provide a further support to the tail of a received fish (not shown). As depicted here, the support structure 803 is in a lower position e.g. via gravity, which may also be referred to as a locking position, where it locks the tail of a received fish between the support structure 803 and the base plate 107 via pushing force from the support structure 803 onto the tail towards the base plate 107.

The movement of the support structure 803 from the support position to an open fish receiving position may be done by means of sliding the support structure 803 upwards towards the overhead transport-conveyor system 700, which may be a manual movement by an operator. After placing a fish onto the fish carrier, the operator may simply release the support structure 803 causing it to fall automatically down to a support position via gravity.

In the embodiment shown here, the support structure 803 further comprises a wheel 801 that is adapted to engage with a further track (not shown here) so as to push it support structure 803 upwards or downwards, depending on the height level of the further track. Thus, if the internal distance between the upper track 701 and the further track is reduced the fish carrier is moved to an open receiving position without manual interferences, and vice verse, if this distance decreased the support structure 803 is moved down to the locking position.

This embodiment may also be provided with a rotation element 805 that allows a rotation of the fish carrier 100 around an axis that is vertical in relation to the moving direction T of the trolleys 703. In this embodiment the rotation element 805 is rectangular and comprises slots 802 at the corners. The rotation of the fish carrier 100 may be triggered by means of physical interaction between one or more stationary pins (not shown) that may be arranged at one or more fixed positions alongside the track 701. These fixed positions correspond to the positions along the track where the fish carrier 100 has to be rotated by the rotation element 805, where the pin becomes accommodated in one of the slots 802 cause the above mentioned rotation. Because the pin is stationary and the rotation element 805 is rotatable with respect to the guide block 708, the relative movement of the rotation element in the direction of transport T and the pin causes the rotation element 805, and thus the fish carrier 100, to turn over 90°. More details for such overhead transport-conveyor system 700 and rotation element 805 may be found in WO2011/074969, figure 22 and on p.60 1. 26-p.61 1. 14, hereby incorporated by reference.

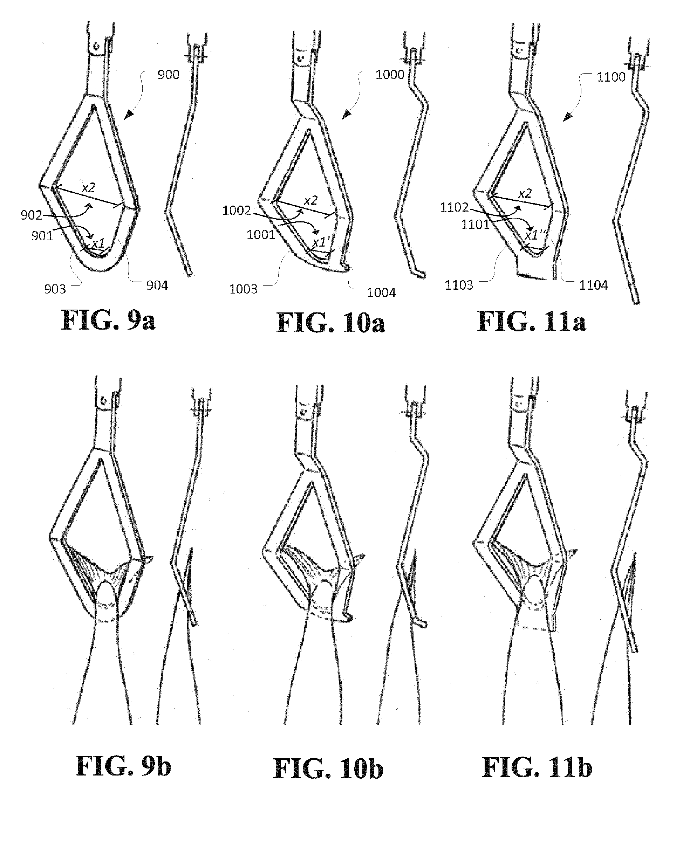

Figures 9-27 show different embodiments of fish carriers according to the present invention.

Figures 9a-11a show a perspective view and a side view of rhombus like fish carriers 900-1100 in the absence of a fish, and figures 9b-11b show the same rhombus like fish carriers carrying a fish. As depicted in these embodiments, the fish carriers are made of a single piece item, such as metal rod or beams and the like. The spaced apart bars 903, 904, 1003, 1004, 1103, 1104 according to the present invention are the lower sides of the rhombus like fish carriers that form acute angles facing down and define the holding ends x1 901, x1" 1003, x1" 1103. The widest distance x2>x1 of the rhombus like fish carriers serve as the receiving ends 902, 1002, 1102 of the fish carriers.

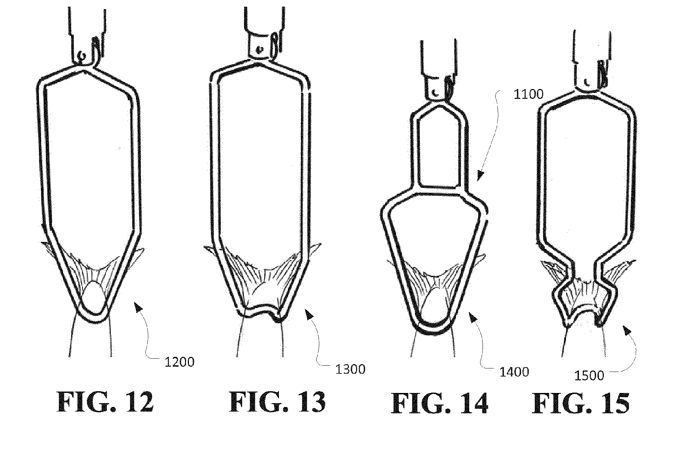

Figures 12-15 depict graphically other embodiments of fish carriers 1200-1500 according to the present invention, where the fish carriers are made of a single piece item.

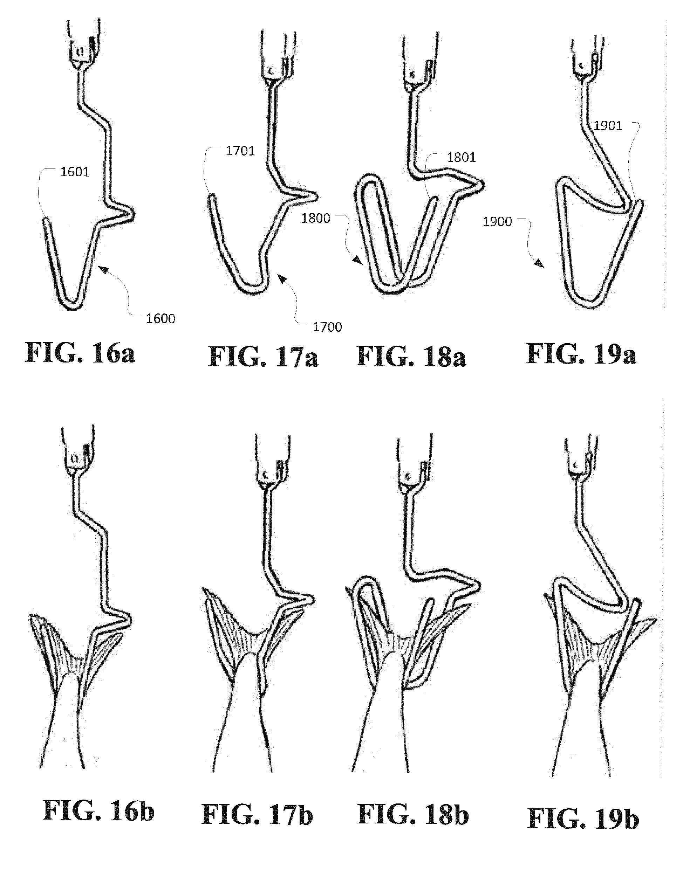

Figures 16-19 depict yet other embodiments of V-shaped fish carriers 1600-1900 according to the present invention, where the fish carriers are made of a single piece item where the open upper ends act as the receiving ends and where each of the fish carriers have a free end 1601-1901. Figures 16a-19a show the fish carriers 1600-1900 and figures 16b-19b shown the fish carriers 1600-1900 carrying a fish.

Figures 20-27 depict still other embodiments of different shaped fish carriers 2000-2700 according to the present invention.

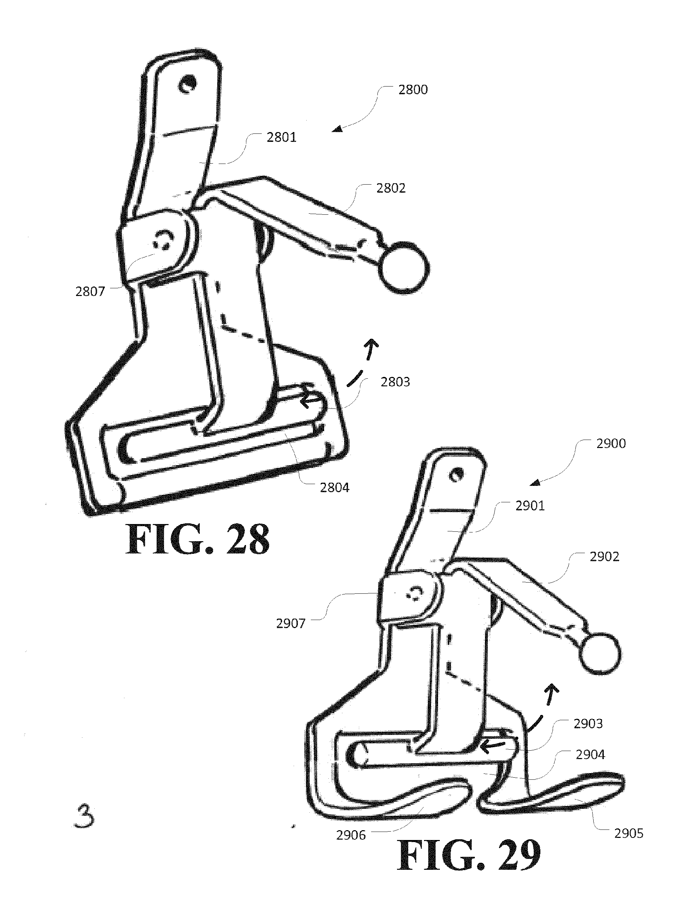

Figures 28 and 29 show another types of fish carriers 2800, 2900. These fish carriers are adapted to be connected to an overhead transport-conveyor system for carrying at least one fish at the tail part of the fish with the head of the fish facing down.

Figure 28 shows a fish carrier 2800 comprising a base structure 2801 having an elongated opening 2804 at its lower end, and a handle 2802 that it attached to the base structure 2801 via a hinge system 2807 for allowing a rotational movement of an elongated beam, as indicated by the dotted arrow. The handle comprises the elongated beam 2803 at its distal end that fits into the elongated opening 2804. Moreover, a spring system (not shown) may e.g. be arranged within the hinge system 2807 for providing an attractive force between the base structure 2801 and the handle 2802 such that, in absence of an external force such as manual force from an operator, the rest position of the handle, as shown here, is such that the elongated beam 2803 is at least partly within the elongated opening 2804.

Figure 29 shows a similar fish carrier as shown in figure 28, also comprising a base structure 2901, a handle 2902 having an elongated beam 2903 at its distal end, a hinge system 2907 for the above mentioned rotational movement of the handle 2902 in relation to the base structure 2901 and a spring system (not shown) for providing an attractive force between the base structure 2901 and the handle 2902.

This embodiment further comprise a parallel ski-like structures 2905, 2906 at the proximal end of the base structure 2901 pointing away from the base structure with a distance there between defining a receiving end of the base structure. At the proximal end of the ski-like structure is an opening similar as discussed in relation to figure 28 where the rest position of the handle 2902 is such that the elongated beam 2903 is at least partly within the elongated opening 2904.

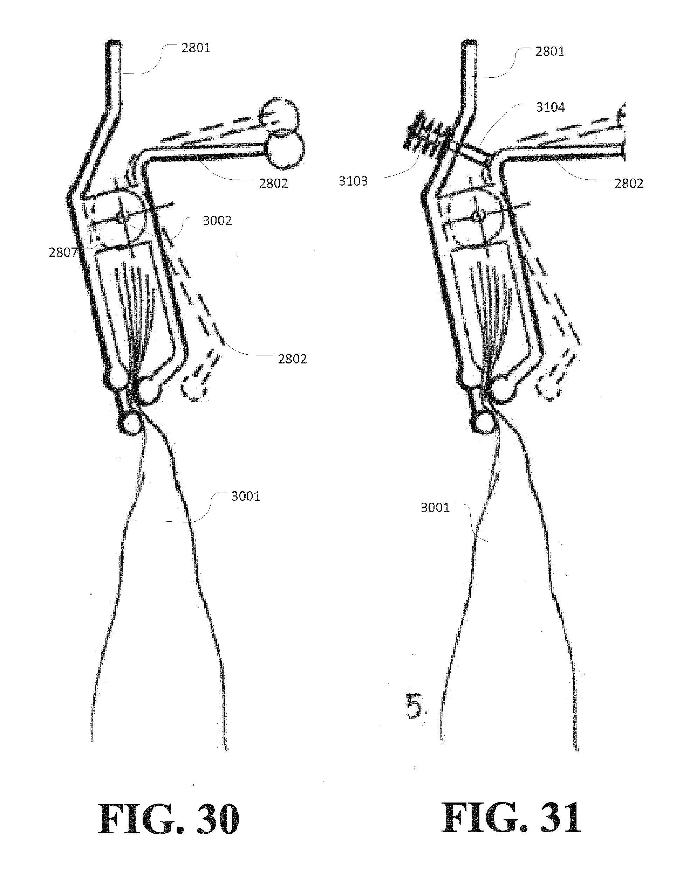

Figure 30 depicts graphically a side view of the fish carrier shown in figure 28. The handle 2802 is shown both in an open extended position (see the dotted lines) and in a closed compressed position (see the solid lines of the handle) where the fish is clamped at the tail part between the opening 2804 in the base structure 2801 and the elongated beam 2803. As already addressed, the attractive force between the handle 2802 and the base structure 2801 may be provided via spring system, e.g. a helical spring and the like may be integrated into the hinge system 2804, or as depicted in figure 31 an external spring 3103 circumferentially surrounds a pin 2801 that extends through the base structure and is in contact with the handle 2802, where the spring may be mounted to the distal left end of the pin 3104 and to the base structure 2801. When opening the fish carrier (see the dotted lines) the pin 3104 moves the spring 3103 to an expanded position, and when releasing the handle 2802 the spring force supplies the force needed to maintain the fish 3001 in the vertical position shown here, i.e. the spring moves the pin 3104 and thus the handle 2802 back to the initial closed position as indicated by the solid line.

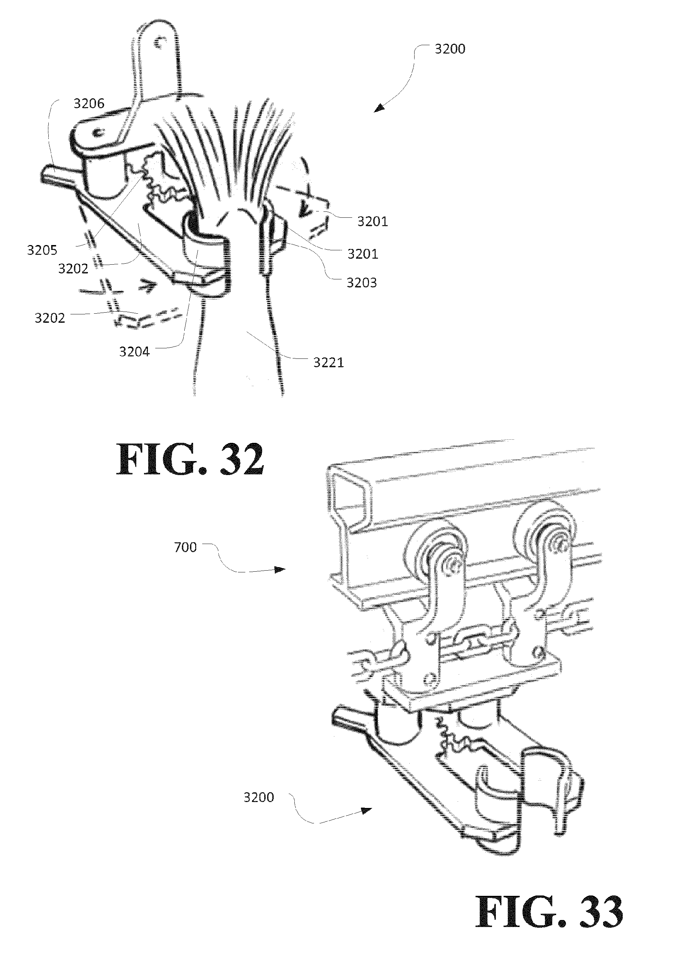

Figures 32 shows another example of a fish carrier 3200 adapted to be connected to an overhead transport-conveyor system 700 for carrying at least one fish 3201 at the tail part of the fish with the head of the fish facing down.

The fish carrier comprises a pair of plate structures 3201, 3202 arranged substantially in a horizontal way comprising arc shaped sides 3203, 3204 at their distal ends with the concave sides facing each other, and handles 3206 associated to the respective one of the plate structures 3201, 3202 (the handle associated to plate structure 3201 is not shown). The plate structures 3201, 3202 may also comprise semi-circular wheels adjacent to the handles that engage with each other when e.g. an operator or any means opens/closes the fish carrier 3200 via pushing/releasing movement on the handle. Accordingly, by pulling the two handles 3206 together the plate structures move away from each other (see the dotted lines of the plate structures), and when releasing the handles 3206 the plate structures from the open position towards the closing position as indicated by the arrows. The geometrical shape of the arc shaped sides 3203, 3204 is selected such that, when being in a closed position, the cross sectional area is preferably somewhat less than the cross sectional area at the tail end of the fish 3201.

Also, the plate structures 3201, 3202 are internally connected together via an elastic system (not shown) such as a spring system to provide the attractive force between the plate structure needed to carry the fish 3221 at the tail end as shown here.

Figure 33 shows the fish carrier 3200 from figure 32 attached to an overhead transport-conveyor system 700 such as the one discussed in relation to figure 7.

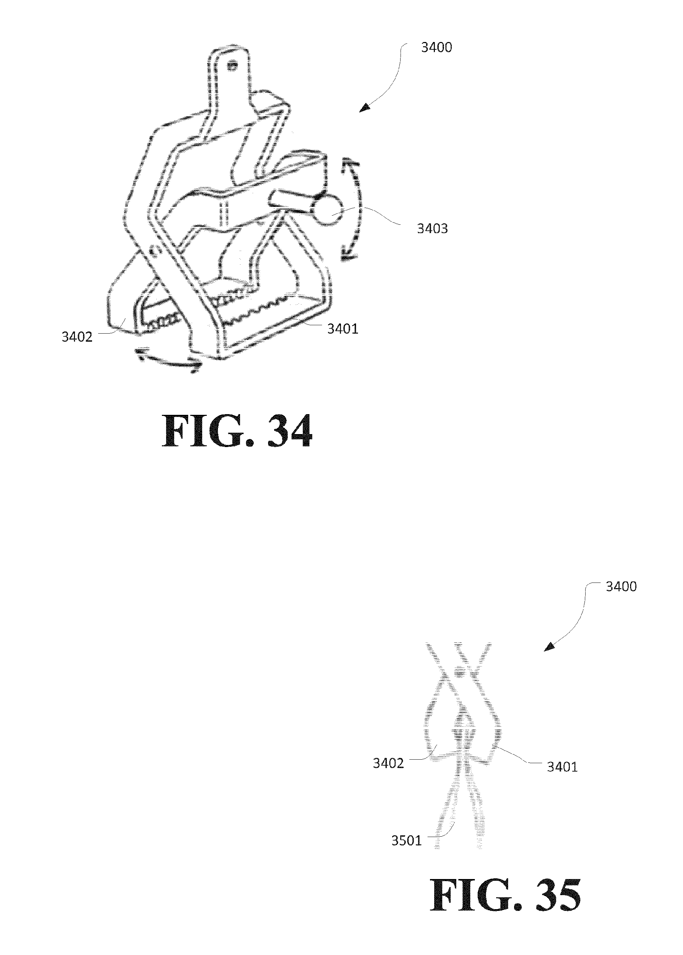

Figure 34 and 35 show a perspective view and a side view of yet another example of fish carrier 3400 adapted to be connected to an overhead transport-conveyor system 700 for carrying at least one fish 3221 at the tail part of the fish with the head of the fish facing down comprising a pair of parallel and horizontally arranged beams 3401, 3402. The adjacent sides of the horizontally arranged beams 3401, 3402 have tooth like structures so as to enhance the grip between the beams 3401, 3402 and the fish.

Similarly as discussed previously in relation to figures 28-33, an elastic system may be provided (not shown) such that, when the handle is released from the open position shown here, the beams 3401, 3402 become clamped together via elastic force, e.g. via a spring and the like.

Figure 35 shows the fish carrier and the beams 3401, 3402 in figure 34 in a clamped position and are holding a fish such the head facing down.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A fish carrier (100) adapted to be connected to an overhead transport-conveyor system (700) for carrying at least one fish at the tail part of the fish (101) with the head of the fish facing down, comprising:
spaced apart bars (103, 104), one end of the spaced apart bars acting as a receiving end (106) where a fish is received at the tail part and the other opposite end of the spaced apart bars acting as a holding end (105) where the fish is hold at the tail part,
wherein the fish carrier is adapted to be used in relation with fish species having outwardly protruding parts (102) extending from the spine of the fish at the tail end of the fish, the distance between the spaced apart bars at the holding end being less than the distance between the outwardly protruding parts such that when a fish is received at receiving end it becomes propped between the spaced apart bars at the holding end via the outwardly protruding parts of the fish.

2. A fish carrier according to claim 1, wherein the spaced apart bars (103, 104) extend upwardly from a first end of a base structure (107) towards a second end of the base structure, where the distal ends of the spaced apart bars act as the receiving end (106) and where the spaced apart bars at the proximal end act as the holding end.

3. A fish carrier according to claim 1 or 2, wherein the distance between the spaced apart bars at the receiving end is larger than the distance between the spaced apart bars at the holding end.

4. A fish carrier according to any of the preceding claims, wherein the distance between the spaced apart bars successively increases from the holding end towards the receiving end of the spaced apart bars.

5. A fish carrier according to any of the claims 2-4, wherein the distal ends of the spaced apart bars are bended away (108, 109) from the base structure (107).

6. A fish carrier according to any of the claims 2-5, wherein the spaced apart bars is an integral part of the base structure.

7. A fish carrier according to any of the preceding claims, further comprising a first distance adjustment mechanism (513) adapted to adjust the distance at the holding end of the spaced apart bars to a tail end width of a received fish.

8. A fish carrier according to claim 7, wherein the first distance adjustment mechanism (513) comprises an elastic system connected to the spaced apart bars adapted to maintain the holding end of the spaced apart bars in a contracted position in absence of a fish, where upon receiving a fish at the receiving end of the spaced apart bars the distance at the holding end of the spaced apart bars moves from the contracted position to an extended position where it becomes adapted to the width of the tail end of the received fish.

9. A fish carrier according to any of the claims 2-8, wherein the distance between the base part and the spaced apart bars at the holding end substantially matches a tail end thickness of a received fish.

10. A fish carrier according to any of the claims 2-9, further comprising a second distance adjustment mechanism (514) adapted to adjust the distance between the base part and the spaced apart bar at the holding end to a tail end thickness of a received fish.

11. A fish carrier according to claim 10, wherein the second distance adjustment mechanism (514) comprises an elastic system connected to the base part and the pair of spaced apart bars adapted to maintain the base part and the pair of spaced apart bars in a contracted position in absence of a fish, where upon receiving a fish at the holding end of the spaced apart bars the distance between the base part and the pair of spaced bars moves from the contracted position to an extended position where it becomes adapted to the thickness of the tail end of the received fish.

12. A method of carrying a fish using a fish carrier (100) adapted to be connected to an overhead transport-conveyor system (700) for carrying at least one fish at the tail part of the fish (101) with the head of the fish facing down, where the fish carrier comprises:
spaced apart bars (103, 104), one end of the spaced apart bars acting as a receiving end (106) where a fish is received at the tail part and the other opposite end of the spaced apart bars acting as a holding end (105) where the fish is hold at the tail part,
wherein the fish carrier is adapted to be used in relation with fish species having outwardly protruding parts (102) extending from the spine of the fish at the tail end of the fish, the distance between the spaced apart bars at the holding end being less than the distance between the outwardly protruding parts such that when a fish is received at receiving end it becomes propped between the spaced apart bars at the holding end via the outwardly protruding parts of the fish.
